# EUROPEAN PATENT SPECIFICATION

(11) **EP 2 628 984 B1**
(45) Date of publication and mention of the grant of the patent: **22.08.2018**
(21) Application number: 13153632.8
(22) Date of filing: 01.02.2013
(51) Int. Cl.: F24D 19/10, F16K 11/048

(54) **Improved three-way diverter valve**
Verbessertes Dreiwege-Schaltventil
Soupape de dérivation à trois voies améliorée

(30) Priority: 15.02.2012 IT MI20120208
(43) Date of publication of application: 21.08.2013
(73) Proprietor: FUGAS SPA, 20090 Trezzano sul Naviglio (Milan) (IT)
(72) Inventor: Fugazza, Giuseppe, 20090 Trezzano sul Naviglio (Milano) (IT)
(74) Representative: Ripamonti, Enrico

(56) References cited:
- DE-A1- 1 450 624
- DE-A1- 10 305 394
- US-A- 4 924 911

## Description

The present invention relates to a three-way valve for use in a boiler, in accordance with the introduction to the main claim.

A three-way valve or diverter valve is known to be usually connected to a conduit originating from the primary heat exchanger of the boiler where the water present is directly heated by a burner. This conduit, or primary conduit, is connected to an inlet of a valve block of the three-way valve; this block presents an internal cavity containing a valving body with a movable member enabling the water originating from the primary conduit to be directed towards two different outlets of the valving body. A room heating installation is connected to a first outlet or aperture, whereas the second outlet or aperture is connected to a conduit directed towards a secondary heat exchanger connected to a domestic water installation.

The movement of the movable member within the valving body cavity enables the water from the first conduit to be selectively directed towards the heating installation or towards the secondary heat exchanger.

More particularly, the valving body comprises an enclosure open laterally via a third aperture to enable the water from the primary conduit to pass into it. A piston positioned axially movable within the enclosure has a piston rod carrying two valving elements positioned axially spaced apart on said rod. These valving elements are arranged to selectively close passages within the internal cavity of the three-way valving body such as to direct the water heated by the burner either towards the heating installation or towards the secondary heat exchanger, depending on which passage is closed.

The piston moves within the valving body positioned in the cavity of the valving body in known manner; for example by the action of an electric motor cooperating with an end of the piston rod emerging from the valving body and sealedly separated from the cavity of said block where the piston moves.

Two preloaded return springs are usually mounted on the piston rod: a first spring positioned at one end of the piston on that side of the valve block connected to the second heat exchanger, to maintain a first valving element closed onto a corresponding passage in order to achieve water circulation from the primary conduit to the heating installation; and a second spring arranged to oppose the force of the first spring in order to facilitate closure of the second valving element onto the corresponding passage and withdrawal of the first valving element from the corresponding passage (and the opening of this latter) when domestic hot water is required. In this latter situation, the water from the primary conduit passes into the conduit connected to the secondary heat exchanger.

In known solutions, the second spring is always immersed in the fluid of the heating installation. This fluid often contains chemically aggressive additives (such as an antifreeze liquid or a wash liquid for the installation), the continuous presence of the spring in this liquid of the heating installation together with the fact that it is more subjected to stress than the first spring (because the circulation of hot water through this installation takes place more frequently than the circulation of water towards the second heat exchanger for the domestic water) resulting in more rapid wear of this second spring than of the first spring. The second spring is hence more subjected to possible breakage than the first spring.

In addition, for the aforesaid reasons, the second spring can undergo quicker deterioration than the first spring and become noisy in operation.

DE 1450624, is the closest prior art for the present invention and to it the preamble of the main claim refers to. It describes a control device for mechanical presses and other machines comprising a valve for controlling air feed to said machine. This prior patent, which forms the subject matter of the introduction to the main claim, does not describe the use of a three-way valve within a boiler of a heating installation and hence does not describe the use of this valve as a by-pass member for discharging the increasing pressure in a room heating installation towards a secondary heat exchanger of the boiler. In this respect it is known that in a room heating installation (comprising a boiler connected to a plurality of radiators) the water must be continuously circulated while the boiler burner is in operation in order to prevent its overheating, with problems for the usual pump provided for water circulation through the installation. As overpressure can be created in this latter (for example because of the closure of a valve of one or more radiators controlling water circulation therethrough) which could create problems in the boiler, a by-pass conduit is often provided downstream of the diverter valve (and before the first radiator of the installation). This conduit is connected to a final branch of the installation at a point close to the boiler.

In this manner, if an overpressure in the installation arises, for example linked to the closure of the water inlet valves to all radiators (for example the thermostatic valves present therein), upstream increase of water circulation through the boiler can occur via the by-pass conduit.

However, this solution results in greater installation costs, greater complexity and greater space requirement precisely because of the presence of the by-pass conduit.

Moreover, it is known to construct the valving body in two parts, of which one is of composite material, these being screwed together to form a single piece. In particular, this valving body of the state of the art has its composite (plastic) material portion always subjected to the action of the fluid originating from the primary conduit. This results in a more rapid wear of this portion than the other portion which is generally of metal and secures the valving body to the valve block.

Finally, known three-way valves usually have at least one of the two valving elements rigidly connected to the piston rod. This means that the valving element, when closed, is not necessarily completely coupled to its seat provided in the passage within the cavity of the valve block, with obvious sealing problems.

An object of the present invention is to provide a diverter valve or three-way valve for a boiler which represents an improvement over known valves.

A particular object of the invention is to provide a diverter valve of the stated type which can also act as a by-pass for the water of the heating installation when an overpressure arises in the part connected to the usual radiators, thus avoiding the need to provide an actual by-pass conduit downstream of the valve.

Another object of the invention is to provide a three-way valve of the stated type the elastic return elements (springs) of which have a comparable life and do not generate noise during their movement due to different wear between them.

Another object is to provide a three-way valve of the stated type which is of simple and rapid assembly and mounting and which always ensures reliable operation with time.

A further object is to provide a three-way valve of the stated type which is able to always effectively close the connections between the primary conduit and the heating installation or the second heat exchanger.

These and other objects which will be apparent to the expert of the art are attained by a three-way valve in accordance with the accompanying claims.

The present invention will be more apparent from the accompanying drawings, which are provided by way of non-limiting example and in which:
Figure 1 is a cross-section through a three-way valve according to the invention;
Figure 2 is a front view of a component of the valve of Figure 1;
Figure 3 is a section on the line 3-3 of Figure 2;
Figure 4 is a perspective view of the component of Figure 2; and

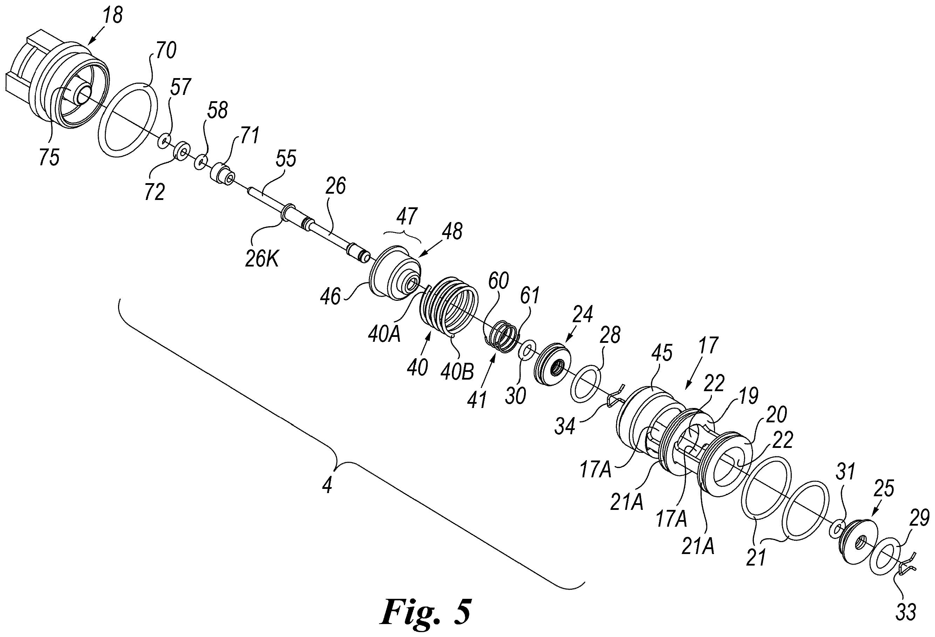

Figure 5 is an exploded view of the component of Figure 2.

With reference to said figures, a three-way valve or diverter valve is indicated overall by 1. It comprises a valve block 2 provided with a cavity 3 in which a valving body 4 is inserted, fixed to one end 5 of the cavity 3 by screwing. This latter is connected by a hole 8 to an aperture 9 of the block 2, to be connected to a primary conduit (not shown) of a boiler, of which the valve is a component.

The cavity 3 is connected via a hole 11 to another aperture 13 of the valve block 2 to which a conduit (not shown) is connected to connect the valve 1 to a usual secondary heat exchanger (also not shown) of the boiler. The cavity 3 terminates with a reduced diameter end portion 14 opening at 15 to be connected to a heating installation. It should be noted that the cavity 3 is of constant diameter as far as the portion 14, without any projections or undercuts on its walls.

The valving body 4 comprises a first monopiece metal portion 17 coupled, for example by screwing (and hence separable), to a second metal portion 18 screwed to the end 5 of the cavity 3. The first and second portion of the circular body 4 define, once connected together, an assembly which can be moved as a single piece, so facilitating the introduction and connection of the valving body 4 to the valve block 2 or the replacement of this body by extracting it from the cavity 3. This body can however be easily separated into its portions 17 and 18 for maintenance or for general inspection.

The first portion 17 of the body 4 presents two spaced-apart annular parts 19 and 20, supporting perimetral annular seal members 21 positioned in corresponding recesses 21A, which seal against the wall of the cavity 3. The parts 19 and 20 define apertures 22 onto which valving elements 24 and 25 close, these being fixed to a rod 26 of a piston 27 movable within the body 4.

Advantageously, these valving elements 24 and 25 rock on said rod, achieved by forming holes 24A and 25A in said valving elements (through which said rod passes) of diameter slightly greater than the diameter of the piston rod 26.

By virtue of this rocking characteristic, the actuators 24 and 25 can adapt to the apertures or seats 22 of the annular parts 19 and 20 of the valving body, said apertures or seats 22 enabling hot water heated by the primary conduit to pass to the section 14 and hence to the heating installation, or to the hole 11 and hence to the secondary heat exchanger for the domestic water installation. Said adaptation enables secure shutoff of said apertures to be achieved (which takes place selectively depending on whether the boiler is activated for room heating or for water heating for domestic use), by overcoming any production imperfections in the apertures or valving elements. The water from the aperture 8 can reach the apertures 22 of the valving body 4 by virtue of the fact that this latter presents, in the first portion 17, lateral windows 17A which enable said water to penetrate into the valve block.

Annular seal members (O-rings) 28 and 29 are associated perimetrally with the valving elements 24 and 25; other O-rings 30 and 31 are positioned at their holes 24A and 25A.

It should be noted that the valving element 25 in proximity to the section 14 of the cavity 3 is positioned downstream of the corresponding annular part 20 (in the direction of the fluid entering the block 2 from the hole 8) and is locked to the piston 27 by a split pin 33 (or similar mechanical member). Likewise, the valving element 24 in proximity to the hole 11 of the valve block 2 is positioned downstream of the annular part 19, again considering as reference the fluid flow entering from the aperture 8 and directed, in this case, to the hole 11 and to the second heat exchanger. Between the valving element 24 and the part 19, on the rod 26 of the piston 27 a split pin 34 (or similar mechanical member) is positioned to prevent sliding of the valving element along this rod towards the part 19 (although enabling the valving element to position itself on the aperture 22 of this latter).

Return springs 40 and 41 are positioned on the rod 26 of the piston 27. However, in contrast to known solutions, both are disposed in proximity to the hole 11 of the block 2 or rather to the aperture 13 of this latter which connects it to the secondary heat exchanger. This prevents these springs from being always immersed in the fluid present in the heating installation, its fluid containing a product (such as anti-freeze) which can corrode or at least damage the springs.

The springs 40 and 41 are hence always immersed in the water directed towards the secondary heat exchanger, i.e. are positioned in the second portion 18 of the valving body 4.

More particularly, the first return spring 40 is disposed within a cup-shaped end 45 of the first portion 17 of the body 4, positioned in proximity to the second portion 18 of the body 4 and screwed to this latter. This spring has a first end 40A resting on a flange 46 of a cup-shaped element 47 fixed onto the rod 26 of the piston 27, inserted into the cup-shaped end 45 and movable within this latter. The element 47 has a body 48 presenting two portions, 48A and 48B of different cross-sections, the portion 48B of smaller cross-section facing the valving element 24. The spring 40 presents a second end 40B resting on an end portion 49 of the cup-shaped end 45 of the said portion 17.

This spring is arranged to maintain a thrust on the cup-shaped element 47, which is rigid with the rod 26 (and hence with the piston 27) in that this rod has a flanged end 26K internal to the element 47 (passing through a hole 50 of the portion 48B) which rests on an end flat part 52 of this portion 48B. The cup-shaped element 47 moves within a hole 49A of the portion 49.

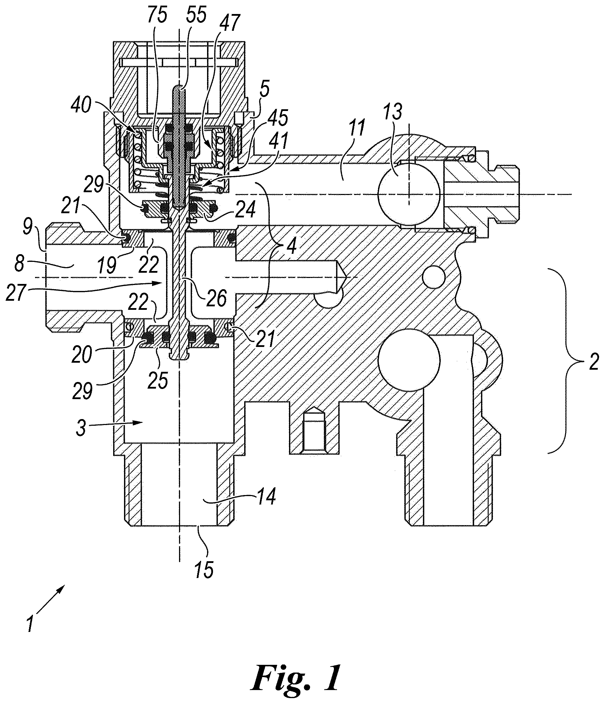

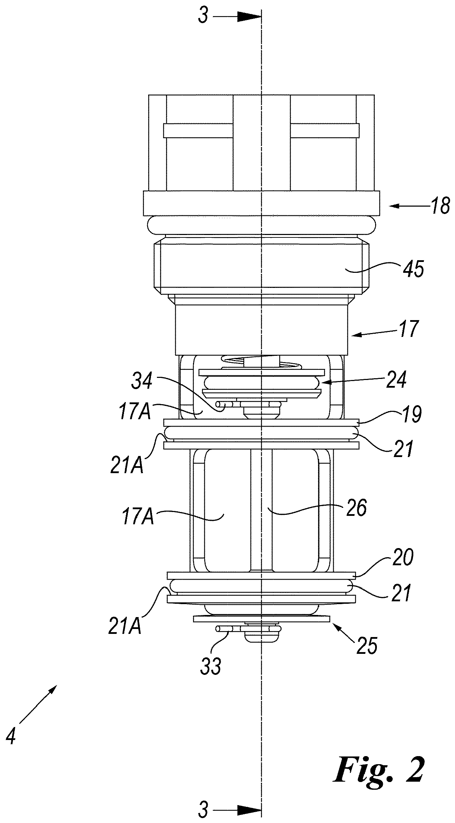

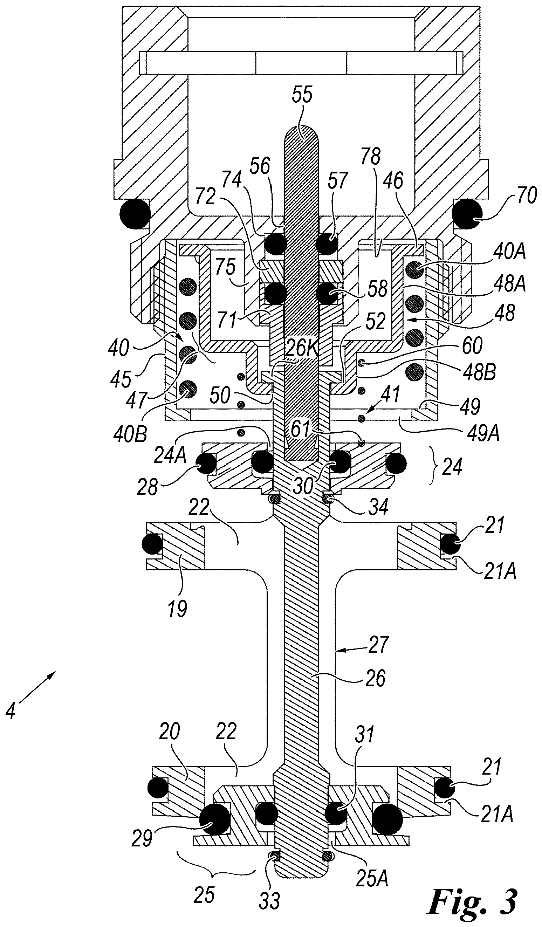

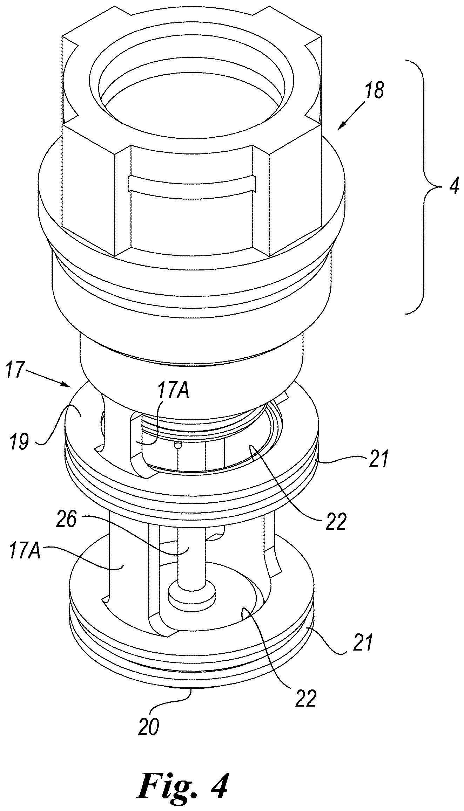

The thrust of the spring enables the valving body 4 to be maintained in a first working position, i.e. in a position in which it closes the flow of water to the heating installation (or rather in which the valving element 25 closes the aperture 22 of the annular part 20), as shown in Figures 1, 2, 3 and 4. In this position, the valving body 4 returns (by virtue of the spring 47) after a valving element (for example an electric motor or other known thrust member) has moved the piston 27 such as to open the aperture 22 with which the valving element 25 cooperates to feed hot water (at the request of a thermostat, for example) to the heating installation, while at the same time closing the valving element 24 onto the aperture 22 of the part 19.

It should be noted that the valving element acts on that end 55 of the piston 27 emerging from the cavity 3 via the second portion 18 of the valving body 4. In particular, this end 55 passes through a hole 56 of the portion 18, seal members 57, 58 acting on the piston 27 to prevent fluid leakage from the cavity 3 (to hence protect the valving element, especially if an electric motor, from the water present in the valve 1).

The second spring 41 is fixed about the portion 48B of the body 48 of the cup-shaped element 47 and acts, by way of its opposing ends 60 and 61, on the body 48 and on the valving element 24 respectively. This spring has a double function of opposing the movement of the cup-shaped element by adding it to the action of the spring 40 when the valving body 4 moves into the position which enables hot water to be fed to the heating installation (position in which the valving element 24 closes the seat 22 of the part 19); at the same time, even if the valving body 4 is in this position, the spring 41 enables the valving element 224 to separate from its seat 22 to discharge any overpressure generated in the heating installation towards the second heat exchanger or towards the domestic water production installation. In this manner the conduit directed from the valve 1 towards this heat exchanger can be utilized as a by-pass circuit to discharge this pressure.

Finally, about the portion 18 of the annular body 4 there is an annular seal member 70, while a sleeve 71 and a ring 72 are mounted on the end 55 of the piston 27, between which a seal member 58 is positioned, the other seal member 57 being positioned between the ring 72 and the base 74 of a cylindrical part 75 projecting from a side 78 of the portion 18 within the body 4, and containing said seal members 57 and 58.

The valve according to the invention provided with the aforedescribed valving body has a prolonged life and a better and more reliable operation than the valves of the state of the art.

One embodiment of the invention has been described; others are however possible while remaining within the scope of the following claims.

## Claims

1. A three-way valve (1) **for use** in a boiler and having a first aperture (14) **suitable to be** connected to a room heating installation, a second aperture (13) **suitable to be** connected to a heat exchanger for domestic hot water production, and a third aperture (**9**) **suitable to be** connected to an inlet conduit for water joined to a primary heat exchanger of the boiler, said valve (1) comprising a valving body (4) provided with said apertures (8, 13, 14) and containing a piston (27) and two valving elements (24, 25) which are associated with said piston and are arranged to be brought, by the axial movement of the piston (27) within the valving body (4), into two working positions, in a first of which hot water originating from the third aperture (8) of the heat exchanger is enabled to flow towards the heating installation, and in the second of which said water is enabled to flow through the second aperture (13) towards the heat exchanger for domestic hot water production, the valving body (4) comprising spaced-apart annular parts (19, 20) each presenting an aperture (22) to be closed by a corresponding valving element (24, 25), said apertures (22) being opened by detaching the corresponding valving element (24, 25) from them to enable hot water to alternatively flow through said body (4) towards the heating installation or towards the second heat exchanger, a first and a second return springs (40, 41) being positioned on said piston, said springs (40, 41) being both positioned on a side of the piston (27) close to the second aperture (13) of the valving body (4) and **in a hole (11) connected to said second aperture (13),** at least one of the valving elements (24, 25) associated with the piston (27) being movable relative to this latter, the second spring (41) acting on that valving element (24) **suitable to close** the aperture (22) of the valving body (4) and **to intercept and close** the hot water flow to the secondary heat exchanger, said valving element (24) **being separated** from the corresponding seat (22) **by** an overpressure in the water of the heating installation, so to discharge this pressure towards the second heat exchanger, **characterised in that** each valving element (24, 25) movable relative to the piston (27) is associated with a rod (26) of this latter and presents a hole (24A, 25A) through which said rod passes and which has a cross-section greater than the diameter of said rod, the valving element (24, 25) being able to rock about said rod, between this latter and the valving element a corresponding seal member (30, 31) being present.

2. A three-way valve as claimed in claim 1, **characterised in that** the valving body (4) comprises a first and a second metal portion (17, 18) coupled together to define a member movable as a single piece, said member being inserted into a cavity (3) of a valve block (2) of the three-way valve (1), and being removably secured to said block by screwing the second portion (18) to an end (5) of said cavity, said cavity (3) presenting an end portion (14) to be connected to the heating installation, and being of constant cross-section until said portion (14).

3. A three-way valve as claimed in claim 1, **characterised in that** each spaced-apart annular part (19, 20) of the valving body (4) **carries** a perimetral annular seal member (21) which seals against the wall of the cavity (3) in which said valving body (4) is disposed.

4. A three-way valve as claimed in claim 1, **characterised in that** a first return spring (40) is disposed between a movable element (47) mounted about the piston (27) and rigid therewith, and a terminal portion (49) of a cup-shaped end (45) of the first portion (17) of the valving body, said spring (40) opposing the movement of the movable element and hence of the piston which brings the valving body (4) into a position in which the three-way valve (1) enables hot water to flow to the heating installation.

5. A three-way valve as claimed in claim 4, **characterised in that** the second spring (41) acts on the valving element (24) for intercepting and closing the flow of hot water to the secondary heat exchanger, said second spring being positioned between the valving element (24) for intercepting and closing the flow of hot water to the secondary heat exchanger and said movable element associated with the piston (27), to enable said valving element (24) to separate from the corresponding seat (22) whenever an overpressure arises in the water of the heating installation, this separation enabling this pressure to be discharged towards the second heat exchanger.

6. A three-way valve as claimed in claim 4, **characterised in that** the movable element (47) mounted about the piston (27) presents two portions (48A, 48B) of different cross-sections, the portion (48B) of smaller cross-section facing the adjacent valving element (24), the second spring (41) being positioned about said portion (48B) of smaller cross-section, this spring having its opposing ends (60, 61) resting on said movable element (47) and on said valving element respectively.

7. A three-way valve as claimed in claim 2, **characterised in that** the piston (27) moves within a hole (56) of the second portion (18) of the valving body (4) and emerges therefrom in order to be subjected to the action of an actuator for its movement, two seal members being provided associated with the piston within the second portion (18) to prevent leakage of water from the cavity in which the valving body (4) is positioned through the hole (56).

## Patentansprüche

1. Dreiwegeventil (1) zur Benutzung in einem Kessel, das eine erste, zur Verbindung mit einer Raumheizungsanlage geeignete Öffnung (14), eine zweite, zur Verbindung mit einem Wärmetauscher für die Erzeugung von Brauchwarmwasser geeignete Öffnung (13), sowie eine dritte, zur Verbindung mit einer an einen Primärwärmetauscher des Kessels angeschlossene Wassereinlassleitung geeignete Öffnung (9) hat, wobei das genannte Ventil (1) einen Ventilkörper (4) umfasst, der mit den genannten Öffnungen (8, 13, 14) versehen ist und der einen Kolben (27) und zwei Ventilelemente (24, 25) umfasst, wobei diese dem genannten Kolben zugeordnet sind und derart angeordnet sind, dass sie durch die axiale Bewegung des Kolbens (27) innerhalb des Ventilkörpers (4) in zwei Betriebsstellungen gebracht werden, wobei in der ersten Stellung das aus der dritten Öffnung (8) des Wärmetauschers stammende warme Wasser gegen die Heizungsanlage fliessen kann und in der zweiten Stellung das genannte Wasser durch die zweite Öffnung (13) gegen den Wärmetauscher für die Erzeugung von Brauchwarmwasser fliessen kann, wobei der Ventilkörper (4) voneinander beabstandete, ringförmige Teile (19, 20) umfasst, wobei jeder Teil eine durch ein entsprechendes Ventilelement (24, 25) zu schliessende Öffnung (22) aufweist, wobei die genannten Öffnungen (22) geöffnet werden, indem sie von dem entsprechenden Ventilelement (24, 25) abgetrennt werden, so dass das warme Wasser durch den genannten Körper (4) gegen die Heizungsanlage oder gegen den zweiten Wärmetauscher wechselweise fliessen kann, wobei eine erste und eine zweite Rückstellfeder (40, 41) auf dem genannten Kolben angeordnet sind, wobei die genannten Rückstellfeder (40, 41) sowohl an einer Seite des Kolbens (27) in der Nähe von der zweiten Öffnung (13) des Ventilkörpers (4) als auch in einer, mit der genannten zweiten Öffnung (13) verbundenen Bohrung (11) angeordnet sind, wobei mindestens eines der dem Kolben (27) zugeordneten Ventilelemente (24, 25) relativ zu demselben bewegbar ist, wobei die zweite Feder (41) auf das Ventilelement (24) wirkt, das sich eignet, die Öffnung (22) des Ventilkörpers (4) zu schliessen und die Strömung des warmen Wassers zu dem Sekundärwärmetauscher zu erfassen und schliessen, wobei das genannte Ventilelement (24) von dem entsprechenden Sitz (22) durch einen Überdruck in dem Wasser der Heizungsanlage getrennt ist, um diesen Druck gegen den zweiten Wärmetauscher zu entlassen, **dadurch gekennzeichnet, dass** jedes relativ zu dem Kolben (27) bewegbare Ventilelement (24, 25) einer Kolbenstange (26) zugeordnet ist und eine Bohrung (24A, 25A) aufweist, durch welche die Kolbenstange läuft und die einen größeren Querschnitt aufweist als den Durchmesser der genannten Stange, wobei das Ventilelement (24, 25) um die genannte Stange schwenken kann, wobei ein entsprechendes Dichtungselement (30, 31) zwischen der Stange und dem Ventilelement vorhanden ist.

2. Dreiwegeventil nach Anspruch 1, **dadurch gekennzeichnet, dass** der Ventilkörper (4) einen ersten und einen zweiten Metallteil (17, 18), die miteinander verbunden sind, umfasst, um ein einstückig bewegbares Element zu definieren, wobei das genannte Element in eine Kavität (3) eines Ventilblocks (2) des Dreiwegeventils (1) eingeführt wird und an dem genannten Block abnehmbar befestigt ist, indem der zweite Teil (18) an einem Ende (5) der genannten Kavität angeschraubt ist, wobei die genannte Kavität (3) einen mit der Heizungsanlage zu verbindenden Endteil (14) aufweist und einen konstanten Querschnitt bis zu dem genannten Teil (14) hat.

3. Dreiwegeventil nach Anspruch 1, **dadurch gekennzeichnet, dass** jeder voneinander beabstandete, ringförmige Teil (19, 20) des Ventilkörpers (4) ein umfängliches, ringförmiges Dichtungselement (21) trägt, das zum Abdichten gegen die Wand der den genannten Ventilkörper (4) enthaltenden Kavität (3) ausgebildet ist.

4. Dreiwegeventil nach Anspruch 1, **dadurch gekennzeichnet, dass** eine erste Rückstellfeder (40) zwischen einem um den Kolben (27) einstückig gelagerten, bewegbaren Element (47) und einem Endteil (49) eines becherförmigen Endes (45) der ersten Teils (17) des Ventilkörpers angeordnet ist, wobei die genannte Feder (40) die Bewegung des bewegbaren Elements und damit des Kolbens entgegenwirkt, wobei der Ventilkörper (4) in eine Stellung gebracht wird, worin das Dreiwegeventil (1) warmes Wasser zu der Heizungsanlage durchfliessen lässt.

5. Dreiwegeventil nach Anspruch 4, **dadurch gekennzeichnet, dass** die zweite Feder (41) auf das Ventilelement (24) zum Erfassen und Schliessen der Strömung des warmen Wassers zu dem Sekundärwärmetauscher wirkt, wobei die genannte zweite Feder zwischen dem Ventilelement (24) zum Erfassen und Schliessen der Strömung des warmen Wassers zu dem Sekundärwärmetauscher und dem genannten, dem Kolben (27) zugeordneten, bewegbaren Element angeordnet ist, um die Abtrennung des genannten Ventilelements (24) von dem entsprechenden Sitz (22) zu ermöglichen, wenn ein Überdruck in dem Wasser der Heizungsanlage steigt, wobei durch diese Abtrennung dieser Druck gegen den zweiten Wärmetauscher entlassen werden kann.

6. Dreiwegeventil nach Anspruch 4, **dadurch gekennzeichnet, dass** das um den Kolben (27) gelagerte, bewegbare Element (47) zwei Teile mit verschiedenen Querschnitten (48A, 48B) aufweist, wobei der Teil (48B) mit dem kleineren Querschnitt dem benachbarten Ventilelement (24) gegenüberliegt, wobei die zweite Feder (41) um den genannten Teil (48B) mit dem kleineren Querschnitt angeordnet ist, wobei die gegenüberliegenden Enden (60, 61) dieser Feder jeweils auf dem genannten bewegbaren Element (47) und auf dem genannten Ventilelement liegen.

7. Dreiwegeventil nach Anspruch 2, **dadurch gekennzeichnet, dass** sich der Kolben (27) in die Bohrung (56) des zweiten Teils (18) des Ventilelements (4) bewegt und daraus austritt, so dass ein Antrieb zu seiner Bewegung darauf einwirken kann, wobei zwei dem Kolben zugeordnete Dichtungselemente innerhalb des zweiten Teils (18) vorhanden sind, um Wasserlecken aus der den Ventilkörper (4) durch die Bohrung (56) enthaltenden Kavität zu vermeiden.

## Revendications

1. Soupape à trois voies (1) à utiliser dans une chaudière et ayant une première ouverture (14) conçue pour être connectée à une installation de chauffage de pièce, une deuxième ouverture (13) conçue pour être connectée à un échangeur de chaleur pour la production d'eau chaude sanitaire et une troisième ouverture (9) conçue pour être connectée à un conduit d'entrée pour eau relié à un échangeur de chaleur primaire de la chaudière, ladite soupape (1) comprenant un corps de soupape (4) pourvu desdites ouvertures (8, 13, 14) et contenant un piston (27) et deux éléments de soupape (24, 25) associés avec ledit piston et agencés pour être déplacés par le mouvement axial du piston (27) à l'intérieur du corps de soupape (4) dans deux positions de travail, dans la première desquelles l'eau chaude provenant de la troisième ouverture (8) de l'échangeur de chaleur peut écouler vers l'installation de chauffage et dans la seconde desquelles ladite eau peut écouler à travers la deuxième ouverture (13) vers l'échangeur de chaleur pour la production d'eau chaude sanitaire, le corps de soupape (4) comprenant des parties annulaires (19, 20) écartées l'une de l'autre, chacune présentant une ouverture (22) à fermer par un élément de soupape (24, 25) correspondant, lesdites ouvertures (22) étant ouvertes en détachant d'elles l'élément de soupape (24, 25) correspondant, pour permettre à l'eau chaude d'écouler alternativement à travers ledit corps (4) vers l'installation de chauffage ou vers le second échangeur de chaleur, un premier et un second ressort de rappel (40, 41) étant positionnés sur ledit piston, lesdits ressorts (40, 41) étant positionnés sur un côté du piston (27) près de la deuxième ouverture (13) du corps de soupape (4) et dans un trou (11) connecté à ladite deuxième ouverture (13), au moins un des éléments de soupape (24, 25) associés avec le piston (27) étant mobile par rapport à ce dernier, le second ressort (41) agissant sur l'élément de soupape (24) conçu pour fermer l'ouverture (22) du corps de soupape (4) et pour capter et fermer l'écoulement d'eau chaude à l'échangeur de chaleur secondaire, ledit élément de soupape (24) étant séparé du siège (22) correspondant par une surpression dans l'eau de l'installation de chauffage, de sorte à décharger cette pression vers le second échangeur de chaleur, **caractérisée en ce que** chaque élément de soupape (24, 25) mobile par rapport au piston (27) est associé avec une tige (26) de ce dernier et présente un trou (24A, 25A) traversé par ladite tige et ayant une section transversale plus grande que le diamètre de ladite tige, l'élément de soupape (24, 25) pouvant osciller autour de ladite tige, un élément d'étanchéité (30, 31) étant présent entre la tige et l'élément de soupape.

2. Soupape à trois voies selon la revendication 1, **caractérisée en ce que** le corps de soupape (4) comprend une première et une seconde portion de métal (17, 18) couplées ensemble pour définir un organe mobile en une seule pièce, ledit organe étant introduit dans une cavité (3) d'un bloc de soupape (2) de la soupape à trois voies (1) et étant fixé de manière amovible audit bloc en vissant la seconde portion (18) à une extrémité (5) de ladite cavité, ladite cavité (3) présentant une portion d'extrémité (14) à connecter à l'installation de chauffage et ayant une section transversale constante jusqu'à ladite portion (14).

3. Soupape à trois voies selon la revendication 1, **caractérisée en ce que** chaque partie annulaire écartée (19, 20) du corps de soupape (4) porte un élément d'étanchéité annulaire périphérique (21) pour assurer l'étanchéité contre la paroi de la cavité (3) dans laquelle ledit corps de soupape (4) est agencé.

4. Soupape à trois voies selon la revendication 1, **caractérisée en ce qu'**un premier ressort de rappel (40) est agencé entre un élément mobile (47) monté autour du piston (27) et solidaire de ce dernier et une portion terminale (49) d'une extrémité en forme de coupe (45) de la première portion (17) du corps de soupape, ledit ressort (40) opposant le mouvement de l'élément mobile et par conséquent du piston qui déplace le corps de soupape (4) dans une position où la soupape à trois voies (1) permet à l'eau chaude d'écouler jusqu'à l'installation de chauffage.

5. Soupape à trois voies selon la revendication 4, **caractérisée en ce que** le second ressort (41) agit sur l'élément de soupape (24) pour capter et fermer l'écoulement d'eau chaude à l'échangeur de chaleur secondaire, ledit second ressort étant positionné entre l'élément de soupape (24) pour capter et fermer l'écoulement d'eau chaude à l'échangeur de chaleur secondaire et ledit élément mobile associé avec le piston (27), pour permettre audit élément de soupape (24) de se séparer du siège (22) correspondant lorsque la surpression augmente dans l'eau de l'installation de chauffage, cette séparation permettant à cette pression de se décharger vers le second échangeur de chaleur.

6. Soupape à trois voies selon la revendication 4, **caractérisée en ce que** l'élément mobile (47) monté autour du piston (27) présente deux portions (48A, 48B) ayant des sections transversales différentes, la portion (48B) ayant la section transversale plus petite faisant face à l'élément de soupape (24) adjacent, le second ressort (41) étant positionné autour de ladite portion (48B) ayant la section transversale plus petite, ce ressort ayant ces extrémités opposées (60, 61) qui s'appuient respectivement sur ledit élément mobile (47) et sur ledit élément de soupape.

7. Soupape à trois voies selon la revendication 2, **caractérisée en ce que** le piston (27) se déplace à l'intérieur d'un trou (56) de la seconde portion (18) du corps de soupape (4) et sort de ce dernier pour être soumis à l'action d'un actionneur pour son mouvement, deux éléments d'étanchéité étant prévus, associés avec le piston à l'intérieur de la seconde portion (18) pour éviter des fuites d'eau de la cavité où le corps de soupape (4) est positionné à travers le trou (56).
